# EUROPÄISCHE PATENTANMELDUNG

(11) **EP 2 862 683 A1**
(43) Veröffentlichungstag der Anmeldung: **22.04.2015**
(21) Anmeldenummer: 14189329.7
(22) Anmeldetag: 17.10.2014
(51) Int. Cl.: B26D 7/06, B26D 7/32, B25J 15/00, B65B 25/00, B26D 7/30

(54) **Vorrichtung und Verfahren zum Verarbeiten von Lebensmittelprodukten**

(30) Priorität: 18.10.2013 DE 102013221194; 04.12.2013 DE 102013113471
(71) Anmelder: Textor Maschinenbau GmbH, 87787 Wolfertschwenden (DE)
(72) Erfinder: Schmeiser, Jörg, 87487 Wiggensbach (DE); Rother, Ingo, 35236 Breidenbach (DE)
(74) Vertreter: Manitz, Finsterwald & Partner GbR

(57) **Zusammenfassung**

Eine Vorrichtung zum Verarbeiten von Lebensmittelprodukten umfasst wenigstens eine Schneidvorrichtung, die dazu ausgebildet ist, aufzuschneidende Produkte einem sich in einer Schneidebene bewegenden Schneidmesser einspurig oder mehrspurig zuzuführen, um die Produkte in einzelne Scheiben aufzuschneiden, und eine sich an die Schneidvorrichtung anschließende Portioniereinheit zum Bilden von Portionen aus herabfallenden Scheiben. Die Portioniereinheit umfasst wenigstens einen Roboter, der eine Basis, eine Kinematik und einen mittels der Kinematik relativ zur Basis beweglichen Endeffektor aufweist, wobei der Endeffektor eine Produktablage zum Aufnehmen der Scheiben und zum Bilden von Portionen aus den Scheiben aufweist.

## Beschreibung

Die vorliegende Erfindung betrifft eine Vorrichtung zum Verarbeiten von Lebensmittelprodukten mit einer Schneidvorrichtung, die dazu ausgebildet ist, aufzuschneidende Produkte einem sich in einer Schneidebene bewegenden Schneidmesser einspurig oder mehrspurig zuzuführen, um die Produkte in einzelne Scheiben aufzuschneiden, und einer sich an die Schneidvorrichtung anschließenden Portioniereinheit zum Bilden von Portionen aus herabfallenden Scheiben.

Bei der industriellen Verarbeitung von Lebensmittelprodukten wie Fleisch-, Wurst- oder Käseprodukten ist es häufig erforderlich, von einer Schneidvorrichtung wie einem Hochleistungs-Slicer aufgeschnittene Produktscheiben zu Portionen zusammenzustellen, welche nachfolgend zu verpacken sind. Zum Bilden der Portionen können die Einzelscheiben beispielsweise auf einer Auflagefläche der Portioniereinheit gestapelt oder geschindelt und nach Fertigstellung der Portion abtransportiert werden. Die Portioniereinheit kann zu diesem Zweck als Bandförderer ausgebildet sein. Prinzipiell könnte es auch sein, dass eine Portion lediglich eine einzige Scheibe umfasst.

Vorrichtungen der genannten Art sind bevorzugt derart ausgelegt, dass sie ein vollautomatisches Erzeugen abgepackter Portionen ermöglichen. Solche so genannten "Produktionslinien" umfassen meist eine Vielzahl von aneinander gereihten Förder- und Positioniereinrichtungen wie Übergabeförderer, Wiegestationen, Ausschleusungs-Wippen, Spreizförderer, Aufreihförderer und Pufferförderer. Der Platzbedarf solcher Produktionslinien ist beträchtlich. Darüber hinaus sind die hohen Anschaffungskosten von Nachteil.

Es ist eine Aufgabe der Erfindung, eine Vorrichtung zum Verarbeiten von Lebensmittelprodukten anzugeben, die in üblicher Weise eine Portionsbildung ermöglicht, jedoch günstig in der Anschaffung ist und einen geringen Platzbedarf aufweist.

Die Lösung der Aufgabe erfolgt durch eine Vorrichtung mit den Merkmalen des Anspruchs 1.

Erfindungsgemäß umfasst die Portioniereinheit wenigstens einen Roboter, der eine Basis, eine Kinematik und einen mittels der Kinematik relativ zur Basis beweglichen Endeffektor aufweist, wobei der Endeffektor eine Produktablage zum Aufnehmen der Scheiben und zum Bilden von Portionen aus den Scheiben aufweist.

Das Portionieren erfolgt also nicht wie auf dem Fachgebiet üblich auf einem in die Produktionslinie integrierten Förderband, sondern auf einer Produktablage, die von einem eigenständigen Roboter gehandhabt wird. Der Roboter kann dabei die Produktablage wie ein Tablett unter das vordere Ende der Schneidvorrichtung halten, um die abgetrennten Scheiben aufzunehmen. Die Kinematik kann je nach Anbindung vergleichsweise einfach oder relativ komplex ausgestaltet sein. Selbst bei einfachen Robotern bestehen im Allgemeinen ausreichend viele Bewegungsmöglichkeiten, um hinsichtlich der Portionsbildung eine hohe Flexibilität zu gewährleisten. Während man also auf dem Fachgebiet bislang davon ausgegangen ist, dass das Portionieren aufgeschnittener Lebensmittelproduktscheiben grundsätzlich mittels einer in eine Produktionslinie integrierten Portionierfördereinheit zu erfolgen hat, beruht die Erfindung auf der Erkenntnis, dass der Einsatz eines Roboters als Portioniereinheit bei geringem Platzbedarf das Bereitstellen sämtlicher gewünschten Portionierfunktionen ermöglicht.

Weiterbildungen der Erfindung sind in den abhängigen Ansprüchen, der Beschreibung sowie der beigefügten Zeichnung angegeben.

Gemäß einer Ausgestaltung der Erfindung ist die Portioniereinheit ausschließlich durch den Roboter gebildet. Ein gängiger Roboter ist nämlich in der Lage, die Produktablage in derart vielfältiger Weise zu bewegen, dass sich weitere Portionierkomponenten in vielen Fällen erübrigen. Eine solche Lebensmittelverarbeitungsvorrichtung, welche im einfachsten Fall lediglich aus einem Slicer und einem diesem beigestellten Roboter besteht, ist besonders kompakt und kostengünstig.

Vorzugsweise ist der Roboter derart angeordnet und betreibbar, dass die abgetrennten Scheiben direkt auf die Produktablage des Endeffektors fallen. Der Roboter hält also sozusagen die Produktablage direkt in den Fallbereich der abgetrennten Einzelscheiben, so dass keine separate Übergabeeinheit erforderlich ist.

Wenn gemäß einer möglichen Ausgestaltung, die nachstehend näher erläutert wird, im Fallweg der Scheiben ein Hindernis vorgesehen wird, so dass die fallenden Scheiben mit dem Hindernis wechselwirken, bevor sie auf die Produktablage des Endeffektors fallen, dann ist hierunter ebenfalls ein direktes Fallen der Scheiben auf die Produktauflage zu verstehen.

Im Fallweg der Scheiben kann ein, bevorzugt an der Schneidvorrichtung angebrachtes, Hindernis zum Beeinflussen der Fallbewegung bzw. der Scheiben angeordnet sein. Hierbei kann es sich um ein starres Hindernis wie eine einfache Stange oder um ein bewegliches Hindernis wie z.B. ein insbesondere relativ kurzes, bevorzugt mit relativ hoher Geschwindigkeit umlaufendes Endlosband handeln. Durch Beeinflussen der Scheiben bzw. deren Fallbewegung kann eine veränderte Ablage der Scheiben auf der Produktablage erzielt werden. Insbesondere können die Scheiben gefaltet, umgeklappt oder gestaucht zur Ablage kommen, was bei bestimmten Anwendungen gewünscht ist. Speziell können aus gestauchten Scheiben so genannte "shaved meat"-Portionen gebildet werden.

Gemäß einer Ausführungsform der Erfindung ist der Roboter derart angeordnet und betreibbar, dass auf der Produktablage Formatsätze aus mehreren, insbesondere zumindest zum Teil zeitlich nacheinander, auf der Produktablage gebildeten Portionen gebildet werden können. Solche Formatsätze können insbesondere matrixartig sein, also mehrere Spuren und mehrere Zeilen oder Reihen umfassen. Das Bilden von Formatsätzen ist insbesondere dann erforderlich, wenn die Portionen in eine Verpackungsmaschine eingelegt werden sollen, welche für das gruppenweise Aufnehmen von Portionen gemäß einer bestimmten Anordnung ausgelegt ist. Für einen Roboter ist es problemlos möglich, die Produktablage während des Aufschneidebetriebs derart handzuhaben, dass ein gewünschter Formatsatz gebildet wird. Die Übernahme der Funktion "Formatsatzbildung" zusätzlich zu der Funktion "Portionsbildung" durch ein und denselben Roboter ermöglicht eine weitere Verringerung der Kosten und des Platzbedarfs einer Lebensmittel-Verarbeitungsanlage.

Ein zum Roboter zusätzlicher Formatsatzbilder, beispielsweise in Form eines Einlegers, ist nicht erforderlich. Der Roboter nimmt somit insbesondere keine fertigen Formatsätze von einer separaten Einrichtung, z.B. einem Einleger, ab und legt sie dann in ein Verpackungsraster ein, sondern die Formatsätze werden unmittelbar auf dem Roboter, d.h. auf der Produktablage, selbst gebildet.

Das Aufschneiden kann somit insbesondere näher an einer Verpackungsmaschine erfolgen, wodurch die Gesamtgröße der Anlage reduziert werden kann. Der Roboter bildet insbesondere ein direktes Bindeglied zwischen einem Aufschneidebereich und der Verpackungsmaschine.

Vorzugsweise umfasst die Kinematik des Roboters eine Gelenkarmanordnung. Die Anzahl der Glieder der Gelenkarmanordnung kann dabei an die jeweilige Anwendung angepasst sein. Die Kinematik kann insbesondere seriell ausgeführt sein.

Eine weitere Ausführungsform der Erfindung sieht vor, dass die Produktablage mittels der Kinematik entlang einer Verarbeitungsrichtung der Vorrichtung und/oder quer zu der Verarbeitungsrichtung bewegbar ist. Damit können beispielsweise Formatsätze direkt auf der Produktablage gebildet werden. Außerdem ermöglicht eine derartige Beweglichkeit der Produktablage das Erstellen geschindelter Portionen.

Auch das Erzeugen so genannter Kombinationsportionen, welche mehrere überlappend angeordnete Einzelportionen umfassen, ist durch Bewegen der Produktablage mittels der Kinematik auf einfache Weise möglich. Der Vorgang des Überlappens kann dabei entweder gleich beim Portionieren auf der Produktablage erfolgen oder erst beim Einlegen der Portionen in die Verpackung. Im letzteren Fall werden auf der Produktablage zunächst Einzelportionen erzeugt, welche dann durch entsprechendes Bewegen der Kinematik und/oder der Produktablage bzw. eines oder mehrerer die Produktablage bildender Förderer nacheinander in überlappender Anordnung in die Verpackung eingelegt werden.

Ein Bewegen der Produktablage mittels der Kinematik ist auch hilfreich beim Erstellen von Mischportionen, welche Scheiben unterschiedlicher Produktsorten umfassen. Hierzu werden z.B. auf mehreren Spuren einer oder mehrerer Schneidvorrichtungen unterschiedliche Produkte aufgeschnitten, wobei der Roboter durch entsprechendes Bewegen der Produktauflage zuerst eine Portion der ersten Spur aufnimmt, dann den Endeffektor zu der nächsten Spur hinbewegt und dort, vorzugsweise überlappend, eine Portion der anderen Produktsorte aufnimmt.

Eine erfindungsgemäße Vorrichtung kann auch zwei oder mehr Schneidvorrichtungen umfassen. Jede dieser insbesondere als Hochleistungs-Slicer ausgebildeten und im Folgenden auch einfach als "Slicer" bezeichneten Schneidvorrichtungen kann für einen ein- oder mehrspurigen Betrieb ausgebildet sein. Auch können mehrere Roboter vorgesehen sein, von denen jeder mit allen Slicern, mit nur einem Teil der Slicer oder mit nur einem der Slicer zusammenarbeitet. Durch mehrere Roboter kann insbesondere die Taktrate erhöht werden. Die Anordnung des oder der Roboter relativ zueinander, relativ zu den Slicern sowie gegebenenfalls relativ zu wenigstens einer Verpackungsmaschine oder zu einer oder mehreren anderen nachgeordneten Einrichtungen ist grundsätzlich beliebig. Die Slicer können beispielsweise parallel nebeneinander, unter rechten Winkeln und/oder z.B. sternförmig angeordnet sein.

Es können z.B. ein oder mehrere Roboter vor mehreren nebeneinander stehenden, parallel ausgerichteten und entweder ohne Zwischenabstand oder mit geeigneten Zwischenabständen versehenen Slicern oder im Inneren einer von mehreren in Umfangsrichtung beabstandeten Robotern gebildeten Teilkreisanordnung positioniert sein, wobei auf der einer solchen Slicer-Gruppe gegenüberliegenden Seite des oder der Roboter eine oder mehrere nachgeordnete Einrichtungen positioniert sind, insbesondere eine oder mehrere Verpackungsmaschinen, Puffereinrichtungen und/oder Einleger.

Aufgrund seines großen Aktionsbereiches kann der oder jeder Roboter leicht Scheiben von verschiedenen Slicern entgegennehmen. Wenn jeder Slicer mit einer anderen Produktsorte bestückt ist, können so auf einfache Weise Mischportionen erzeugt werden. Auch kann ein Roboter zur Erzeugung von Mischaufschnitt bzw. Mehrsorten-Formatsätzen verschiedene Portionen oder Teilportionen an verschiedenen Spuren bzw. Ablagepositionen abholen.

Das Zusammenführen von Spuren unterschiedlicher Schneidvorrichtungen ist mit herkömmlichen verfahrbaren Portioniereinheiten praktisch überhaupt nicht oder allenfalls unter einem relativ hohen Aufwand möglich. Aufgrund der Erfindung kann eine Mehrslicer-Anlage hingegen im einfachsten Fall aus den Schneidvorrichtungen selbst, dem Roboter sowie einer nachgeordneten Verpackungsmaschine zusammengesetzt sein.

Eine Mehrslicer-Anlage in Verbindung mit einem oder mehreren Robotern ist insbesondere für die Erstellung von Mischportionen vorteilhaft. Dies ist zwar grundsätzlich erfindungsgemäß auch mit lediglich einem einzigen Slicer möglich, der zu einem Mehrspurbetrieb und so zum gleichzeitigen Aufschneiden unterschiedlicher Produkte in der Lage ist. Eine noch größere Flexibilität bei gleichzeitig optimaler Nutzung des jeweils zur Verfügung stehenden Raumes ergibt sich, wenn für die unterschiedlichen Produktsorten mehrere Slicer eingesetzt werden, die dann jeweils nur einspurig betrieben zu werden brauchen.

Die Mischportion wird insbesondere aus Einzelportionen gebildet, die jeweils "sortenrein" sind, d.h. aus von nur einer Produktsorte stammende Scheiben bestehen. Eine Mischportion kann dann z.B. gebildet werden, indem der Roboter sich eine erste Einzelportion von einem eine erste Produktsorte aufschneidenden ersten Slicer "holt" und anschließend an einem eine zweite Produktsorte aufschneidenden zweiten Slicer eine zweite Einzelportion aufnimmt, die insbesondere derart auf der Produktablage des Roboters gebildet wird, dass die Einzelportionen einander überlappen. Alternativ können die Einzelportionen auch nacheinander in die Verpackung eingelegt oder an eine Puffereinrichtung bzw. einen Einleger übergeben werden, d.h. die Mischportion entsteht in diesem Fall nicht auf der Produktablage des Roboters, sondern erst in der Verpackung bzw. an der Puffereinrichtung oder dem Einleger. Hierbei können auch mehrere Roboter eingesetzt werden, die jeweils eine der Einzelportionen bilden und von denen die Mischportionen gemeinsam gebildet werden, indem z.B. ein erster Roboter eine erste Einzelportion beispielsweise in eine Verpackung einlegt, während ein zweiter Roboter gerade an einem Slicer mit der Bildung einer zweiten Einzelportion einer anderen Produktsorte beschäftigt ist, wobei der zweite Roboter diese zweite Einzelportion mit der ersten Einzelportion zu der gewünschten Mischportion kombiniert, wenn der erste Roboter der Bereich der Verpackung wieder verlassen und sich wieder einem Slicer zugewandt hat, um die nächste Einzelportion aufzunehmen.

Indem die Anzahl der Roboter, die Anzahl der Slicer, die Anzahl der Spuren pro Slicer und ggf. auch die Anzahl der Verpackungsmaschinen in Abstimmung auf die jeweilige konkrete Anwendung geeignet gewählt wird und diese Komponenten der Gesamt-Anlage geeignet relativ zueinander aufgestellt werden, dann kann bei minimalem Platzbedarf ein maximaler Grad an Flexibilität für die Erstellung von Portionen im Allgemeinen und von Mischportionen aus von unterschiedlichen Produktsorten stammenden Scheiben im Besonderen realisiert werden.

Die Produktablage kann auch mittels der Kinematik verschwenkbar und/oder verdrehbar sein, insbesondere um eine senkrecht zur Produktablage verlaufende Achse. Der Roboter kann dann z. B. als sogenannter Rundleger genutzt werden.

Es kann auch sein, dass die Produktablage mittels der Kinematik anhebbar und absenkbar ist. Die Produktablage kann somit im Verlauf des Stapelns in der Höhe verstellt werden, um so für jede Produktscheibe ein optimales Auftreffen zu gewährleisten.

Alternativ oder zusätzlich kann auch die Neigung der Produktablage mittels der Kinematik verstellbar sein.

Eine weitere Ausführungsform der Erfindung sieht vor, dass die Produktablage zum Fördern von auf ihr befindlichen Scheiben und/oder Portionen in und gegebenenfalls entgegen einer Förderrichtung ausgebildet ist. Eine derartige Fördermöglichkeit erleichtert insbesondere den Abtransport fertig gebildeter Portionen und/oder fertig gebildeter Formatsätze von der Produktablage. Ein Fördern entgegen der Förderrichtung kann außerdem dazu dienen, Fehlportionen oder Anschnitte zu verwerfen. Weiterhin kann das Fördern in der Förderrichtung alternativ oder zusätzlich zu einer Bewegung der Produktablage an sich in der Förderrichtung dazu genutzt werden, geschindelte Portionen zu erstellen. Als eine Alternative zu einer förderfähigen Produktablage könnte auch ein Rechen vorgesehen sein, der Portionen oder Formatsätze von der Produktablage abtransportiert.

Der Endeffektor des Roboters kann insbesondere zumindest einen Band- oder Riemenförderer umfassen, dessen oberes Trum zumindest einen Teil der Produktablage bildet. Zum Bereitstellen eines Roboters im Sinne der Erfindung ist also zum Beispiel der Produktgreifer eines gängigen Handhabungsroboters gegen ein Bandförderer-Modul auszutauschen. Dies ist konstruktiv auf relativ einfache Weise zu bewerkstelligen.

Die Produktablage kann mehrere parallele Förderspuren aufweisen, welche unabhängig voneinander betreibbar sind. Viele gängige Schneidvorrichtungen sind nämlich zum mehrspurigen Aufschneiden von Lebensmittelprodukten ausgebildet, um eine möglichst hohe Schnittleistung zu ermöglichen. Ein unabhängiges Fördern von Scheiben oder Portionen auf den einzelnen Förderspuren der Produktablage ermöglicht zum Beispiel ein Längsausrichten von Portionen einer Portionszeile oder -reihe. Aber auch eine Formatsatzbildung wird durch einen unabhängigen Antrieb der Förderspuren erleichtert.

Eine spezielle Ausführungsform der Erfindung sieht vor, dass die Produktablage als Aufreih-Förderer und/oder als Spreiz-Förderer ausgebildet ist.

Ein Spreiz-Förderer dient dazu, den erforderlichen seitlichen Abstand zwischen den Portionen einer Portionszeile herzustellen. Eine solche Aufspreizung ist bei vielen Anwendungen nötig, da im Allgemeinen auf dem Slicer die beim mehrspurigen Aufschneiden nebeneinander befindlichen Produkte mit einem möglichst geringen seitlichen Abstand platziert sind, um die Arbeitsbreite des Schneidmessers möglichst gut auszunutzen.

Beim Aufreihen erfolgt eine Längsausrichtung nebeneinander befindlicher Portionen, das heißt die vorderen Kanten der Portionen einer Portionszeile werden gemäß einer senkrecht zur Förderrichtung verlaufenden Querlinie ausgerichtet. Die Nutzung desjenigen Roboters, welcher auch das Portionieren und gegebenenfalls die Formatsatzbildung übernimmt, zum Aufreihen und/oder zum Spreizen ermöglicht eine weitere Verkleinerung und Vereinfachung einer Verarbeitungsanlage.

Eine erfindungsgemäße Vorrichtung kann auch eine Verpackungsmaschine zum automatischen Verpacken der durch die Portioniereinheit gebildeten Portionen umfassen, wobei insbesondere die Verpackungsmaschine unmittelbar anschließend an die Portioniereinheit angeordnet ist. Eine solche Vorrichtung ermöglicht das vollständige Erzeugen abgepackter Portionen aus aufgeschnittenen Lebensmittelprodukten.

Der Roboter kann insbesondere dazu angeordnet und ausgebildet sein, die Portionen, insbesondere Formatsätze aus mehreren auf der Produktablage gebildeten Portionen, mittels des Endeffektors direkt in die Verpackungsmaschine einzulegen. Das heißt der Roboter handhabt den Endeffektor derart, dass die gebildeten Portionen bzw. Formatsätze von der Produktablage direkt in die zugehörigen Verpackungen gelangen, welche von der Verpackungsmaschine bereitgestellt werden. Gängige Verpackungsmaschinen erzeugen zunächst aus einer Kunststofffolienbahn mittels eines Tiefziehprozesses eine Anordnung von Verpackungsmulden, welche auch die Gestalt des Formatsatzes definiert. Nach dem Einlegen der Portionen in die Verpackungsmulden wird eine weitere Kunststofffolienbahn über die Verpackungsmulden gelegt und mit diesen verschweißt. Das Einlegen der Portionen in die Verpackungsmulden wird gängigerweise von einem sogenannten Einleger in Form einer beweglichen Bandfördereinheit durchgeführt. Auf einen solchen aufwändigen Einleger kann jedoch verzichtet werden, wenn derjenige Roboter, welcher auch das Portionieren und gegebenenfalls das Formatieren übernimmt, zusätzlich als Einleger arbeitet. Eine platzsparende Anordnung aus Slicer, Roboter und Verpackungsmaschine kann somit im Prinzip ohne wesentliche Funktionseinbuße eine großräumige Produktionslinie ersetzen.

Prinzipiell kann der Roboter auch dazu angeordnet und ausgebildet sein, Portionen, insbesondere Formatsätze aus mehreren auf der Produktablage gebildeten Portionen, mittels des Endeffektors an eine der Verpackungsmaschine vorgelagerte Puffereinrichtung oder an einen der Verpackungsmaschine vorgelagerten Einleger zu übergeben. Bei einer derartigen Ausgestaltung ersetzt der Roboter also lediglich einen Teil der Produktionslinie, wobei sich dennoch ein beträchtliches Einsparpotential ergibt. Durch eine Puffereinrichtung bzw. einen zusätzlichen Einleger kann der Durchsatz einer Anlage gesteigert werden.

Gemäß einer weiteren Ausführungsform ist bei mehrspurig zugeführten Produkten der Abstand zwischen den Produkten derart einstellbar, dass der Abstand eine vorgegebene bzw. vorgebbare Bedingung einer nachgeschalteten Vorrichtung, insbesondere einem Raster einer Verpackungsmaschine, entspricht. Eine Querverteilung oder-verschiebung der Portionen ist somit nicht erforderlich. Die Produkte werden bereits im richtigen Abstand zueinander geschnitten, so dass auch die sich ergebenden Portionen bereits im richtigen, an die Verpackung angepassten Abstand bzw. Querabstand oder Raster befinden. Die Portionen können demnach unmittelbar von der Produktablage des Roboters an die Verpackungsmaschine abgegeben werden. Auf diese Weise kann stets eine bereits von vornherein korrekt ausgerichtete Zeile mit Portionen erstellt werden. Anschließend kann der Roboter die Portionen übergeben bzw. derart auf der Produktablage, welche insbesondere als Formatbildungstisch ausgebildet ist, weiterfördern, dass Folgezeilen erstellt werden können.

Alternativ ist jedoch auch denkbar, dass die Portionen, beispielsweise durch querverschiebliche Bänder oder andere Förderer der Produktablage, in Querrichtung verschoben werden, um an eine vorgegebene bzw. vorgebbare Bedingung einer nachgeschalteten Vorrichtung, insbesondere einem Raster einer Verpackungsmaschine, angepasst zu werden.

Eine weitere Ausführungsform der Erfindung sieht vor, dass die Portioniereinheit wenigstens einen weiteren Roboter umfasst, welcher eine Basis, eine Kinematik und einen mittels der Kinematik relativ zur Basis beweglichen Endeffektor aufweist, wobei der Endeffektor des weiteren Roboters ebenfalls eine Produktablage zum Aufnehmen der Scheiben und zum Bilden von Portionen aufweist und wobei die Roboter zur einander abwechselnden Portionsbildung, insbesondere Formatsatzbildung, und/oder zur Übergabe von Portionen, insbesondere von Formatsätzen aus mehreren Portionen, von Endeffektor zu Endeffektor angeordnet und betreibbar sind. Während einer der Roboter das Einlegen eines Formatsatzes in die Verpackungsmaschine durchführt, kann auf der Produktablage eines anderen Roboters bereits ein neuer Formatsatz gebildet werden. Somit ermöglicht der Einsatz mehrerer Roboter eine Erhöhung der Taktrate der Anlage.

Vorzugsweise sind zumindest eine, vorzugsweise mehrere, Aufschneidevorrichtung mit wenigstens einer Spur, zumindest ein Roboter mit wenigstens einem Roboterarm und zumindest eine Formatsatzbildungseinrichtung vorgesehen, welche insbesondere für eine Portionsablage verwendbar ist.

Insbesondere umfasst zumindest ein Roboter wenigstens eine Formatsatzbildungseinrichtung, wobei vorzugsweise ein Roboter mehrere Formatsatzbildungseinrichtungen aufweist, die insbesondere zueinander bzw. unabhängig voneinander verstellbar sind.

Der Roboter kann insbesondere sowohl Portionen bzw. Formatsätze bilden als auch die Portionen in eine Verpackungsvorrichtung ablegen. Insbesondere kann der Roboter abwechselnd Portionen aufnehmen, insbesondere Portionen bzw. Formatsätze bilden, und die Portionen in eine Verpackungsvorrichtung ablegen.

Die Erfindung betrifft auch ein Verfahren zum Verarbeiten von Lebensmittelprodukten, insbesondere mittels einer Vorrichtung wie vorstehend beschrieben, bei welchem aufzuschneidende Produkte einem sich in einer Schneidebene bewegenden Schneidmesser einspurig oder mehrspurig zugeführt werden, um die Produkte in einzelne Scheiben aufzuschneiden, und Portionen aus herabfallenden Scheiben gebildet werden.

Üblicherweise werden zum Bilden der Portionen spezielle Fördereinheiten, sogenannte Portionierfördereinheiten, eingesetzt, welche in eine Produktionslinie integriert sind. Solche Produktionslinien sind aufwändig, platzraubend und kostspielig.

Erfindungsgemäß wird daher zum Bilden der Portionen wenigstens ein Roboter eingesetzt, der eine Basis, eine Kinematik und einen mittels der Kinematik relativ zur Basis beweglichen Endeffektor aufweist, wobei die herabfallenden Scheiben von einer Produktablage des Endeffektors aufgenommen werden und auf der Produktablage Portionen aus den aufgenommenen Scheiben gebildet werden. Der Einsatz eines Roboters anstelle einer Portionierfördereinheit mit Untergestell ermöglicht eine beträchtliche Verringerung des Platzbedarfs und der Anschaffungskosten.

Vorzugsweise werden die abgetrennten Scheiben direkt auf die Produktablage des Endeffektors fallen gelassen. Ein zusätzliches Übergabemodul ist insbesondere nicht erforderlich.

Wenn gemäß einer möglichen Ausgestaltung, die an anderer Stelle näher erläutert ist, im Fallweg der Scheiben ein Hindernis vorgesehen wird, so dass die fallenden Scheiben mit dem Hindernis wechselwirken, bevor sie auf die Produktablage des Endeffektors fallen, dann ist hierunter ebenfalls ein direktes Fallen der Scheiben auf die Produktauflage zu verstehen.

Bevorzugt werden auf der Produktablage Formatsätze aus mehreren, insbesondere zumindest zum Teil zeitlich nacheinander, auf der Produktablage gebildeten Portionen gebildet. Der Roboter wird bei dieser Ausgestaltung also nicht nur zum Portionieren, sondern auch zur Formatsatzbildung verwendet. Der Einsatz einer Anordnung aus Pufferförderern oder dergleichen zur Formatsatzbildung ist dann nicht erforderlich.

Die Produktablage kann während der Portionsbildung und/oder während einer Formatsatzbildung mittels der Kinematik bewegt werden. Je nach Ausgestaltung der Kinematik können unterschiedlich viele Bewegungsfreiheitsgrade vorgesehen sein.

Vorzugsweise werden die Formatsätze unmittelbar beim Ablegen auf der Produktablage gebildet, d.h. direkt im Moment des Ablegens mit dem Roboter. Die Produktablage des Roboters kann einen Formatbildungstisch bzw. eine Formatsatzbildungseinrichtung und nicht lediglich einen Portioniertisch bilden.

Auch werden die Portionen insbesondere nicht unmittelbar nach dem Aufschneiden in eine Verpackung eingelegt. Unterhalb der Aufschneidevorrichtung befindet sich beim Aufschneiden nämlich stets die Produktablage des Roboters. So wird insbesondere verhindert, dass Produktreste bzw. Produktschnitzel in die Verpackung fallen.

Gemäß einer Ausführungsform der Erfindung werden auf der Produktablage befindliche Scheiben, Portionen und/oder Formatsätze in und gegebenenfalls entgegen einer Förderrichtung gefördert. Dadurch können mittels des Roboters auf einfache Weise zum Beispiel geschindelte Portionen erstellt oder Anschnitte entgegen der Förderrichtung entfernt werden.

Weiterhin können auf der Produktablage befindliche Scheiben und/oder Portionen auf mehreren unabhängig voneinander betreibbaren Förderspuren gefördert werden, wobei die Förderspuren, beispielsweise zur Längsausrichtung der Portionen einer Portionszeile, zumindest zeitweise mit unterschiedlichen Geschwindigkeiten betrieben werden. Dadurch ist ein Aufreihen direkt auf der Produktablage möglich.

Eine weitere Ausführungsform der Erfindung sieht vor, dass zum Verwerfen eines Produktanschnitts oder eines Produktrests die Produktablage mittels der Kinematik aus dem Fallbereich der Scheiben herausbewegt und erst dann wieder in den Fallbereich der Scheiben zurückbewegt wird, wenn das Verwerfen des Produktanschnitts oder des Produktrests beendet ist. Die unbrauchbaren Scheiben des Produktanschnitts oder der Produktrest können z.B. in einen Ausschussbehälter fallen. Sobald wieder brauchbare Scheiben abtrennbar sind, kann ein Komplettieren von auf der Produktablage befindlichen unvollständigen Teilportionen erfolgen.

Es können auch unvollständige Teilportionen von einem Portionierbereich der Produktauflage in einen Parkbereich der Produktauflage gefördert und nach Verwerfen eines Produktanschnitts oder Produktrests zum Komplettieren wieder von dem Parkbereich in den Portionierbereich zurückgefördert werden. Die Produktauflage ist hierfür zweckmäßiger Weise mit zwei in Förderrichtung aufeinanderfolgenden und separat betreibbaren Produktförderern versehen, insbesondere einem kurzen Portionierförderer und einem nachfolgenden längeren Parkförderer. Eine derartige Ausgestaltung der Produktauflage eignet sich auch zum Erzeugen der vorstehend genannten "shaved meat"-Portionen mit gestauchten Scheiben. Konkret können die Scheiben hierzu von einem mit relativ hoher Fördergeschwindigkeit betriebenen stromaufwärtigen Förderer auf den relativ langsamer laufenden und längeren stromabwärtigen Förderer transportiert werden, woraus eine Stauchung der Scheiben resultiert. Aus den nacheinander einzeln gestauchten Scheiben kann dann durch einen entsprechenden Betrieb der Förderer eine "shaved meat"-Portion aus mehreren gestauchten Scheiben gebildet werden.

Der Roboter kann durch die genannten Maßnahmen mit einer weiteren Funktionalität versehen werden, nämlich dem Komplettieren unvollständiger Teilportionen.

Die auf der Produktablage gebildeten Portionen, insbesondere Formatsätze aus mehreren auf der Produktablage gebildeten Portionen, können an eine Verpackungsmaschine übergeben und in dieser automatisch verpackt werden.

Die Portionen bzw. Formatsätze werden dabei vorzugsweise mittels des Endeffektors direkt in die Verpackungsmaschine eingelegt. Auf das Bereitstellen eines separaten Einlegers kann dann verzichtet werden.

Die Portionen bzw. Formatsätze können auch mittels des Endeffektors an eine der Verpackungsmaschine vorgelagerte Puffereinrichtung oder an einen der Verpackungsmaschine vorgelagerten Einleger übergeben werden. Insbesondere kann dadurch die Taktrate der Anlage erhöht werden.

Eine weitere Ausführungsform der Erfindung sieht vor, dass zum Bilden der Portionen wenigstens ein weiterer Roboter eingesetzt wird, welcher eine Basis, eine Kinematik und einen mittels der Kinematik relativ zur Basis beweglichen Endeffektor aufweist, der ebenfalls eine Produktablage zum Aufnehmen der Scheiben und zum Bilden von Portionen aufweist, wobei die Portionen, insbesondere Formatsätze aus mehreren Portionen, abwechselnd auf den Produktablagen der Roboter gebildet werden und/oder dass die Portionen, insbesondere Formatsätze aus mehreren Portionen, von Endeffektor zu Endeffektor übergeben werden.

In einer weiteren Ausgestaltung der Erfindung werden die Produkte von zwei oder mehr Schneidvorrichtungen aufgeschnitten, wobei der Roboter auf dessen Produktablage von zumindest zwei Schneidvorrichtungen stammende Scheiben aufnimmt. Dabei kann insbesondere vorgesehen sein, dass auf der Produktablage des Roboters Portionen aus von zumindest zwei Schneidvorrichtungen stammenden Scheiben gebildet werden.

Gemäß einer bevorzugten Ausführungsform werden von den zwei oder mehr Schneidvorrichtungen unterschiedliche Produkte aufgeschnitten und auf der Produktablage des Roboters Mischportionen aus Scheiben gebildet, die von unterschiedlichen Produkten stammen. Insbesondere werden dabei die Mischportionen jeweils aus wenigstens zwei Einzelportionen gebildet, die jeweils aus Scheiben nur eines der unterschiedlichen Produkte bestehen.

Die Erfindung betrifft auch die Verwendung eines Roboters, der eine Basis, eine Kinematik und einen mittels der Kinematik relativ zur Basis beweglichen Endeffektor mit einer Produktablage aufweist, zur Bildung, auf der Produktablage, von Portionen aus Scheiben, die mittels einer Schneidvorrichtung von einspurig oder mehrspurig einem sich in einer Schneidebene bewegenden Schneidmesser zugeführten Produkten abgetrennt werden.

Der Roboter kann ferner zur Bildung von Formatsätzen aus mehreren, insbesondere zumindest zum Teil zeitlich nacheinander, auf der Produktablage gebildeten Portionen verwendet werden.

Der Roboter kann auch zum Einlegen von auf der Produktablage gebildeten Portionen, insbesondere Formatsätzen aus mehreren auf der Produktablage gebildeten Portionen, in eine Verpackungsmaschine verwendet werden.

Je nachdem, ob der Roboter ausschließlich zur Portionierung, oder zur Portionierung und zur Formatsatzbildung sowie gegebenenfalls zum Einlegen genutzt wird, ergeben sich unterschiedliche Einsparungsmöglichkeiten beim Bereitstellen einer vollständigen Verarbeitungsanlage.

Des Weiteren kann der Roboter zum Bilden von Mischportionen verwendet werden, die aus Scheiben gebildet werden, welche von unterschiedlichen, mittels zwei oder mehr Schneidvorrichtungen aufgeschnittenen Produkten stammen. Dabei werden insbesondere die Mischportionen jeweils aus wenigstens zwei Einzelportionen gebildet, die jeweils aus Scheiben nur eines der unterschiedlichen Produkte bestehen. Hierdurch lassen sich auf besonders einfache und effiziente Weise Mischportionen bilden, die jeweils aus "sortenreinen", bevorzugt einander überlappenden Einzelportionen bestehen.

Die Erfindung wird nachfolgend beispielhaft unter Bezugnahme auf die Zeichnung beschrieben.
- Fig. 1: ist eine vereinfachte Seitenansicht einer erfindungsgemäßen Vorrichtung zum Verarbeiten von Lebensmittelprodukten.
- Fig. 2: zeigt eine Draufsicht auf die in Fig. 1 dargestellte Vorrichtung.

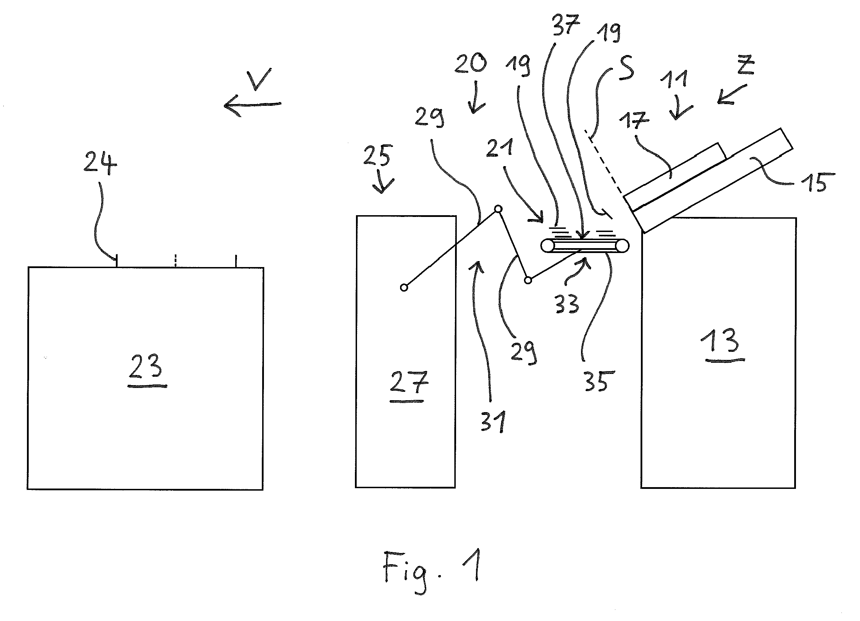

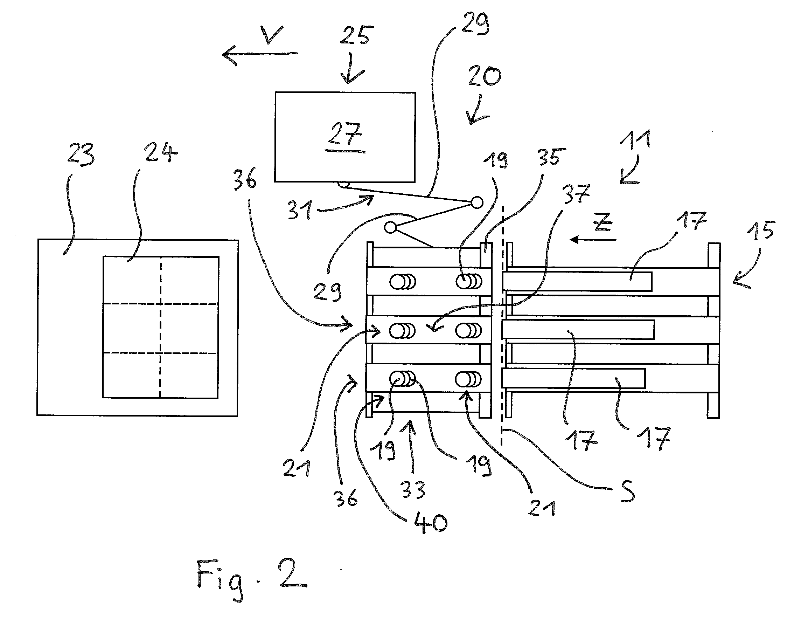

Bei dem in Fig. 1 und 2 dargestellten Ausführungsbeispiel der Erfindung umfasst eine Schneidvorrichtung in Form eines Hochleistungs-Slicers 11 einen Rahmen 13 und eine gegenüber dem Rahmen 13 geneigte Produktzuführung 15, auf welcher drei nebeneinander angeordnete Produktlaibe oder Produktriegel 17 aufliegen. Die Produktzuführung 15 umfasst eine Fördereinrichtung und ist dazu ausgebildet, die Produktriegel 17 entlang einer Zufuhrrichtung Z einer Schneidebene S zuzustellen, in welcher sich ein nicht dargestelltes Schneidmesser, beispielsweise rotierend und/oder planetarisch umlaufend, bewegt. Das Schneidmesser trennt fortlaufend Scheiben 19 von den Produktriegeln 17 ab, welche in einer sich direkt an den Hochleistungs-Slicer 11 anschließenden Portioniereinheit 20 zu Portionen 21 zusammengestellt werden. Beispielhaft sind in den Figuren geschindelte Portionen 21 aus jeweils drei Scheiben 19 dargestellt. Auf die genaue Ausgestaltung der Portionen 21 kommt es jedoch im Rahmen der Erfindung nicht an. Vielmehr ist eine Portion 21 im Sinne der Erfindung eine beliebige, beispielsweise gestapelte und/oder geschindelte, Relativanordnung von abgetrennten und abgelegten Scheiben 19. In einem Extremfall könnte eine Portion 21 auch lediglich eine einzelne Scheibe 19 umfassen.

An die Portioniereinheit 20 schließt sich in einer Verarbeitungsrichtung V gesehen eine Verpackungsmaschine 23 an, die in grundsätzlich bekannter Weise mittels eines Tiefziehprozesses aus einer Kunststoffbahn eine Verpackungseinheit 24 erzeugt, welche einen Formatsatz definiert. Die mit der Portioniereinheit 20 gebildeten Portionen 21 werden als Formatsatz 40 in die Verpackungseinheit 24 eingelegt.

Wie dargestellt ist die Portioniereinheit 20 durch einen Roboter 25 gebildet, welcher eine ortsfeste Basis 27, eine aus mehreren beweglichen Gelenkarmen 29 gebildete Kinematik 31 sowie einen am freien Ende der Kinematik 31 vorgesehenen Endeffektor 33 umfasst. Der Endeffektor 33 ist hier durch einen Bandförderer 35 gebildet, der drei parallele und unabhängig voneinander betreibbare Förderspuren 36 aufweist. Das obere Trum des Bandförderers 35 bildet insgesamt eine Produktablage 37 für die abgetrennten Scheiben 19.

Die Bewegungsfreiheitsgrade des Roboters 25 sind auf die jeweilige Anwendung abgestimmt. Es ist jedoch bevorzugt, dass der Bandförderer 35 mittels der Kinematik 31 sowohl entlang der Verarbeitungsrichtung V als auch quer zu der Verarbeitungsrichtung V sowie zusätzlich anhebbar und absenkbar ist. Bei Bedarf kann auch die Neigung der Produktablage 37 mittels der Kinematik 31 verstellbar sein oder der Bandförderer 35 kann um eine vertikale Rotationsachse verschwenkbar sein.

Wie aus Fig. 1 und 2 hervorgeht, hält der Roboter 25 den Endeffektor 33 während des Aufschneidens der Produktriegel 17 derart, dass die Scheiben 19 von dem Schneidmesser direkt auf die Produktablage 37 fallen. Auf der Produktablage 37 werden Portionen 21 gebildet, wobei der Bandförderer 35 während der Portionsbildung geringfügig abgesenkt wird, um einen möglichst gleichbleibenden Fallweg für die Scheiben 19 zu gewährleisten. Ein Betreiben des Bandförderers 35 in der Verarbeitungsrichtung V während der Portionsbildung ermöglicht das Erstellen von geschindelten Portionen 21. Ein im Rahmen einer Neubestückung des Hochleistungs-Slicers 11 mit Produktriegeln 17 erzeugter Anschnitt kann durch Betreiben des Bandförderers 35 entgegen der Verarbeitungsrichtung V in einen nicht dargestellten Ausschussbehälter befördert werden. Nach Erstellen einer Produktzeile aus drei nebeneinander befindlichen Portionen 21 wird die Produktzeile auf dem Bandförderer 35 um einen vorbestimmten Betrag weiter gefördert und eine weitere Produktzeile wird durch Bildung dreier nebeneinander befindlicher Portionen 21 erstellt. Anschließend befindet sich auf der Produktablage 37 der in Fig. 2 erkennbare 2x3-Formatsatz 40. Natürlich ist der Roboter 25 in der Lage, durch Bewegen des Endeffektors 33 sowie durch individuelles Betreiben der Förderspuren 36 eine Vielzahl von unterschiedlichen Formatsätzen zu erstellen.

Sobald sich ein fertiggestellter Formatsatz 40 auf der Produktablage 37 befindet, bewegt der Roboter 25 den Endeffektor 33 zu der Verpackungsmaschine 23 und legt den Formatsatz 40 in die Verpackungseinheit 24 ein. Dies kann in grundsätzlich bekannter Weise durch Hinwegbewegen des Bandförderers 35 über die Verpackungseinheit 24 unter gleichzeitigem Betreiben der Förderspuren 36 erfolgen. Während des Einlegevorgangs wird der Schneidbetrieb auf dem Hochleistungs-Slicer 11 unterbrochen. Eine derartige Unterbrechung des Schneidbetriebs kann prinzipiell dadurch umgangen werden, dass ein weiterer Roboter bereitgestellt wird, der während des Einlegens durch den anderen Roboter die Portions- und Formatsatzbildung übernimmt.

Nach dem Einlegevorgang bewegt der Roboter 25 den Endeffektor 33 wieder zurück in die in Fig. 1 und 2 dargestellte Position, so dass eine neue Portionsbildung erfolgen kann. Unterdessen wird in der Verpackungsmaschine 23 die befüllte Verpackungseinheit 24 durch eine weitere Kunststofffolienbahn abgedeckt und verschlossen. Die verpackten Portionen 21 sind dann im Prinzip fertig zur Auslieferung.

Ein Wiegen der Portionen 21 findet bei dem dargestellten Ausführungsbeispiel nicht statt. Es ist jedoch möglich, die bereits verpackten Portionen 21 zu wiegen, um einen Gewichtsmittelwert der Portionen zu bestimmen. Mittels einer Regelschleife können dann Betriebsgrößen des Hochleistungs-Slicers 11 wie insbesondere z.B. die Vorschubgeschwindigkeit basierend auf dem ermittelten Gewichtsmittelwert geregelt werden, um so das "give-away" zu minimieren. Da sich anders als bei den üblichen langen Produktionslinien lediglich die vergleichsweise kleine Produktauflage 37 des Roboters 25 zwischen dem Hochleistungs-Slicer 11 und der Verpackungsmaschine 23 befindet, ist es hinsichtlich des "give-away" unproblematisch, den Gewichtsmittelwert erst beim Verpacken, d.h. durch Wiegen der verpackten Portionen, zu ermitteln. Die genannte Gewichtsregelung kommt insbesondere bei Verwendung von Kaliberware in Betracht, welche im Allgemeinen eine hohe Genauigkeit aufweist. Wenn zudem vor dem Hochleistungs-Slicer 11 ein Scanner zum Erfassen der Produktkontur eingesetzt wird, ergeben sich ohnehin kaum nennenswerte Fehlgewichtigkeiten. Ein Wiegen der fertig verpackten Portionen 21 könnte jedoch auch in einem solchen Fall zu Kontrollzwecken durchgeführt werden.

Im Gegensatz zu gängigen Produktionslinien weist die in Fig. 1 und 2 dargestellte Vorrichtung zur Verarbeitung von Lebensmittelprodukten lediglich einen einzigen Bandförderer 35 auf, auf welchem portioniert, ein Formatsatz gebildet und gleichzeitig eingelegt wird. Es liegen nur drei kompakte Einzelmaschinen vor, nämlich der Hochleistungs-Slicer 11, der Roboter 25 und die Verpackungsmaschine 23. Aufgrund der vielfältigen Bewegungsmöglichkeiten des Roboters 25 können diese Komponenten auch anders als linear aneinandergereiht positioniert sein, also beispielsweise über Eck. Ein solches System kann auch unter vergleichsweise beengten Platzverhältnissen betrieben werden, unter welchen die Installation einer klassischen Produktionslinie ausgeschlossen ist.

### Bezugszeichenliste

- 11: Hochleistungs-Slicer
- 13: Rahmen
- 15: Produktzuführung
- 17: Produktriegel
- 19: Scheibe
- 20: Portioniereinheit
- 21: Portion
- 23: Verpackungsmaschine
- 24: Verpackungseinheit
- 25: Roboter
- 27: Basis
- 29: Gelenkarm
- 31: Kinematik
- 33: Endeffektor
- 35: Bandförderer
- 36: Förderspur
- 37: Produktablage
- 40: Formatsatz

- S: Schneidebene
- Z: Zufuhrrichtung
- V: Verarbeitungsrichtung

## Patentansprüche

1. Vorrichtung zum Verarbeiten von Lebensmittelprodukten mit wenigstens einer Schneidvorrichtung (11), die dazu ausgebildet ist, aufzuschneidende Produkte (17) einem sich in einer Schneidebene (S) bewegenden Schneidmesser einspurig oder mehrspurig zuzuführen, um die Produkte (17) in einzelne Scheiben (19) aufzuschneiden, und
einer sich an die Schneidvorrichtung (11) anschließenden Portioniereinheit (20) zum Bilden von Portionen (21) aus herabfallenden Scheiben (19),
**dadurch gekennzeichnet, dass**
die Portioniereinheit (20) wenigstens einen Roboter (25) umfasst, der eine Basis (27), eine Kinematik (31) und einen mittels der Kinematik relativ zur Basis beweglichen Endeffektor (33) aufweist, wobei der Endeffektor (33) eine Produktablage (37) zum Aufnehmen der Scheiben (19) und zum Bilden von Portionen (21) aus den Scheiben (19) aufweist.

2. Vorrichtung nach Anspruch 1,
**dadurch gekennzeichnet, dass**
der Roboter (25) derart angeordnet und betreibbar ist, dass auf der Produktablage (37) Formatsätze (40) aus mehreren, insbesondere zumindest zum Teil zeitlich nacheinander, auf der Produktablage (37) gebildeten Portionen (21) gebildet werden können.

3. Vorrichtung nach Anspruch 1 oder 2,
**dadurch gekennzeichnet, dass** die Produktablage (37) zum Fördern von auf ihr befindlichen Scheiben (19) und/oder Portionen (21) in und gegebenenfalls entgegen einer Förderrichtung ausgebildet ist, wobei
die Produktablage (37) mehrere parallele Förderspuren (36) aufweist, welche unabhängig voneinander betreibbar sind, und wobei die Produktablage (37) als Aufreih-Förderer und/oder als Spreiz-Förderer ausgebildet ist.

4. Vorrichtung nach einem der vorstehenden Ansprüche,
**gekennzeichnet durch**
eine Verpackungsmaschine (23) zum automatischen Verpacken der **durch** die Portioniereinheit (20) gebildeten Portionen (21), wobei insbesondere die Verpackungsmaschine (23) unmittelbar anschließend an die Portioniereinheit (20) angeordnet ist, wobei vorzugsweise der Roboter (25) dazu angeordnet und ausgebildet ist, die Portionen (21), insbesondere Formatsätze (40) aus mehreren auf der Produktablage (37) gebildeten Portionen (21), mittels des Endeffektors (33) direkt in die Verpackungsmaschine (23) einzulegen.

5. Vorrichtung nach einem der vorstehenden Ansprüche,
**dadurch gekennzeichnet, dass**
bei mehrspurig zugeführten Produkten (17) der Abstand zwischen den Produkten (17) derart einstellbar ist, dass der Abstand eine vorgegebene Bedingung einer nachgeschalteten Vorrichtung, insbesondere einem Raster einer Verpackungsmaschine (23), entspricht.

6. Vorrichtung nach einem der vorstehenden Ansprüche,
**dadurch gekennzeichnet, dass**
die Portioniereinheit (20) wenigstens einen weiteren Roboter umfasst, welcher eine Basis (27), eine Kinematik (31) und einen mittels der Kinematik relativ zur Basis beweglichen Endeffektor (33) aufweist, wobei der Endeffektor (33) des weiteren Roboters ebenfalls eine Produktablage (37) zum Aufnehmen der Scheiben (19) und zum Bilden von Portionen (21) aufweist und wobei die Roboter zur einander abwechselnden Portionsbildung, insbesondere Formatsatzbildung, und/oder zur Übergabe von Portionen (21), insbesondere von Formatsätzen (40) aus mehreren Portionen (21), von Endeffektor zu Endeffektor angeordnet und betreibbar sind, und/oder dass zumindest ein Roboter (25) wenigstens eine Formatsatzbildungseinrichtung umfasst, wobei vorzugsweise ein Roboter (25) mehrere Formatsatzbildungseinrichtungen aufweist, die insbesondere unabhängig voneinander verstellbar sind.

7. Vorrichtung nach einem der vorstehenden Ansprüche,
**dadurch gekennzeichnet, dass** zwei oder mehr Schneidvorrichtungen (11) vorgesehen sind und der Roboter (25) angeordnet und betreibbar ist, um Scheiben (19) von zumindest zwei Schneidvorrichtungen (11) aufzunehmen,
insbesondere um Portionen (21) aus Scheiben (19) zu bilden, die von mittels zwei oder mehr Schneidvorrichtungen (11) aufgeschnittenen Produkten (17) stammen,
bevorzugt um Mischportionen (21) zu bilden, die von unterschiedlichen Produkten (17) stammen.

8. Verfahren zum Verarbeiten von Lebensmittelprodukten, insbesondere mittels einer Vorrichtung gemäß einem der vorstehenden Ansprüche,
bei welchem
aufzuschneidende Produkte (17) wenigstens einem sich in einer Schneidebene (S) bewegenden Schneidmesser einspurig oder mehrspurig zugeführt werden, um die Produkte (17) in einzelne Scheiben (19) aufzuschneiden, und
Portionen (21) aus herabfallenden Scheiben (19) gebildet werden,
**dadurch gekennzeichnet, dass**
zum Bilden der Portionen (21) wenigstens ein Roboter (25) eingesetzt wird, der eine Basis (27), eine Kinematik (31) und einen mittels der Kinematik relativ zur Basis beweglichen Endeffektor (33) aufweist, wobei die herabfallenden Scheiben (19) von einer Produktablage (37) des Endeffektors (33) aufgenommen werden und auf der Produktablage (37) Portionen (21) aus den aufgenommenen Scheiben (19) gebildet werden.

9. Verfahren nach Anspruch 8,
**dadurch gekennzeichnet, dass**
auf der Produktablage (37) Formatsätze (40) aus mehreren, insbesondere zumindest zum Teil zeitlich nacheinander, auf der Produktablage (37) gebildeten Portionen (21) gebildet werden, wobei vorzugsweise die Formatsätze (40) unmittelbar beim Ablegen auf der Produktablage (37) gebildet werden.

10. Verfahren nach einem der Ansprüche 8 oder 9,
**dadurch gekennzeichnet, dass**
auf der Produktablage (37) befindliche Scheiben (19), Portionen (21) und/oder Formatsätze (40) in und gegebenenfalls entgegen einer Förderrichtung gefördert werden, wobei
auf der Produktablage (37) befindliche Scheiben (19) und/oder Portionen (21) auf mehreren unabhängig voneinander betreibbaren Förderspuren (36) gefördert werden, wobei die Förderspuren (36), beispielsweise zur Längsausrichtung der Portionen (21) einer Portionszeile, zumindest zeitweise mit unterschiedlichen Geschwindigkeiten betrieben werden.

11. Verfahren nach einem der Ansprüche 8 bis 10,
**dadurch gekennzeichnet, dass**
die auf der Produktablage (37) gebildeten Portionen, insbesondere Formatsätze (40) aus mehreren auf der Produktablage (37) gebildeten Portionen (21), an eine Verpackungsmaschine (23) übergeben und in dieser automatisch verpackt werden, wobei insbesondere die Portionen (21) bzw. Formatsätze (40) mittels des Endeffektors (33) direkt in die Verpackungsmaschine (23) eingelegt werden.

12. Verfahren nach einem der Ansprüche 8 bis 11,
**dadurch gekennzeichnet, dass**
zum Bilden der Portionen (21) wenigstens ein weiterer Roboter eingesetzt wird, welcher eine Basis (27), eine Kinematik (31) und einen mittels der Kinematik relativ zur Basis beweglichen Endeffektor (33) aufweist, der ebenfalls eine Produktablage (37) zum Aufnehmen der Scheiben (19) und zum Bilden von Portionen (21) aufweist, wobei die Portionen (21), insbesondere Formatsätze (40) aus mehreren Portionen (21), abwechselnd auf den Produktablagen (37) der Roboter gebildet werden und/oder dass die Portionen (21), insbesondere Formatsätze (40) aus mehreren Portionen (21), von Endeffektor zu Endeffektor übergeben werden.

13. Verfahren nach einem der Ansprüche 8 bis 12,
**dadurch gekennzeichnet, dass**
Produkte (17) von zwei oder mehr Schneidvorrichtungen (11) aufgeschnitten werden und der Roboter (25) auf dessen Produktablage (25) von zumindest zwei Schneidvorrichtungen (11) stammende Scheiben (19) aufnimmt, wobei insbesondere auf der Produktablage (37) des Roboters (25) Portionen (21) aus von zumindest zwei Schneidvorrichtungen (11) stammenden Scheiben (19) gebildet werden, wobei insbesondere von den zwei oder mehr Schneidvorrichtungen (11) unterschiedliche Produkte (17) aufgeschnitten und auf der Produktablage (37) des Roboters (25) Mischportionen (17) aus Scheiben (19) gebildet werden, die von unterschiedlichen Produkten (17) stammen, wobei bevorzugt die Mischportionen (17) jeweils aus wenigstens zwei Einzelportionen gebildet werden, die jeweils aus Scheiben (19) nur eines der unterschiedlichen Produkte (17) bestehen.

14. Verwendung eines Roboters (25), der eine Basis (27), eine Kinematik (31) und einen mittels der Kinematik relativ zur Basis beweglichen Endeffektor (33) mit einer Produktablage (37) aufweist, zur Bildung, auf der Produktablage (37), von Portionen (21) aus Scheiben (19), die mittels wenigstens einer Schneidvorrichtung (11) von einspurig oder mehrspurig einem sich in einer Schneidebene (S) bewegenden Schneidmesser zugeführten Produkten (17) abgetrennt werden.

15. Verwendung eines Roboters nach Anspruch 14,
**dadurch gekennzeichnet, dass**
der Roboter (25) ferner zur Bildung von Formatsätzen (40) aus mehreren, insbesondere zumindest zum Teil zeitlich nacheinander, auf der Produktablage (37) gebildeten Portionen (21) verwendet wird, und/oder dass der Roboter (25) zum Bilden von Mischportionen (17) verwendet wird, die aus Scheiben (19) gebildet werden, die von unterschiedlichen, mittels zwei oder mehr Schneidvorrichtungen (11) aufgeschnittenen Produkten (17) stammen, wobei bevorzugt die Mischportionen (17) jeweils aus wenigstens zwei Einzelportionen gebildet werden, die jeweils aus Scheiben (19) nur eines der unterschiedlichen Produkte (17) bestehen.
